# FASCICULE DE BREVET EUROPEEN

(11) **EP 3 529 182 B1**
(45) Date de publication et mention de la délivrance du brevet: **26.07.2023**
(21) Numéro de dépôt: 17794762.9
(22) Date de dépôt: 17.10.2017
(51) Int. Cl.: B65G 47/82, C03B 35/10, C03B 9/453, B65G 47/71

(54) **TRANSFERT DE PRODUITS**
PRODUKTTRANSFER
PRODUCT TRANSFER

(30) Priorité: 20.10.2016 FR 1660176
(43) Date de publication de la demande: 28.08.2019
(73) Titulaire: Sidel Participations, 76930 Octeville-sur-Mer (FR)
(72) Inventeur: CIRETTE, Damien, 21910 Corcelles Les Cîteaux (FR); RABEC, Dominique, 21910 Corcelles Les Cîteaux (FR)
(74) Mandataire: Sidel Group
(86) Numéro de dépôt international: PCT/FR2017/052850
(87) Numéro de publication internationale: WO 2018/073529

(56) Documents cités:
- EP-A1- 2 204 342
- EP-A1- 2 594 513
- WO-A1-96/13466
- DE-U1- 20 107 848
- JP-B2- 3 884 595
- JP-U- S5 771 131
- US-A- 1 980 411
- US-A- 2 252 937
- US-A- 3 687 262
- US-A1- 2004 050 661
- Cosmapack Internatonal S.r.l.: "FORMINC600S handling glass bottles with rotating pusher device", YouTube, 16 juillet 2015 (2015-07-16), pages 1-1, XP054977579, Extrait de l'Internet: URL:https://www.youtube.com/watch?v=8HqupI fNiM4 [extrait le 2017-07-20]

## Description

La présente invention relève du domaine des équipements pour le groupage et conditionnement de produits en quantités industrielles et a pour objet, d'une part, un dispositif de transfert particulier, et, d'autre part, un procédé mettant en oeuvre ce dispositif.

Le domaine du conditionnement par groupes de produits du type bouteille, flacon ou autre récipient, fait généralement intervenir un convoyage de produits l'un derrière l'autre, c'est à dire en colonne unifilaire, qu'il faut ensuite transformer en une succession de groupes de produits, souvent organisés de façon matricielle, avec plusieurs produits en ligne et plusieurs produits en colonne.

Pour ce genre de transfert, on connait par exemple EP2167409 qui propose de prévoir un peigne muni d'alvéoles de collecte successives. Les alvéoles sont l'une à côté de l'autre perpendiculairement au sens d'arrivée des produits et sont mises successivement l'une après l'autre en vis-à-vis du flux unifilaire. On crée ainsi un groupe de produits répartis perpendiculairement à la direction d'amenée. Les lots créés sont cependant perpendiculaires à la direction d'entrée, ce qui peut ne pas être compatible avec certaines installations.

EP1560772 divulgue quant à lui un convoyeur sur lequel circulent des produits en entrée sous forme d'une colonne unifilaire, des barres de poussée successives étant prévues pour dégager, chacune à la fois, un groupe de produits sur un convoyeur de sortie qui circule avec un angle aiguë par rapport à la direction d'entrée. Il est cependant nécessaire de prévoir un équipement qui crée un espace sur le convoyeur d'entrée entre deux lots successifs.

De façon générale, dans les systèmes utilisant un poussoir qui dégage simultanément vers le côté plusieurs produits entrant formant un lot, il est fréquent de prévoir en amont un espace entre les lots successifs, pour laisser le temps au poussoir de dégager chaque lot. Cela a des impacts sur la complexité de l'installation et son prix, compte tenu du dispositif additionnel nécessaire en amont, ainsi que sur la cadence. JP 3 884 595 B2 divulgue un dispositif de transfert ainsi qu'une méthode de transfert selon les préambules respectifs des revendications 1 et 6.

EP 2 594 513 A1, WO 96/13466 A1 et US 3 687 262 A divulguent également des systèmes de transfert similaires.

L'invention a pour but d'améliorer cet état de la technique en contribuant à faire face aux inconvénients ci-dessus.

Pour ce faire, l'invention propose de prévoir que l'outil de dégagement transversal suive au moins temporairement le mouvement longitudinal des produits lorsqu'il les dégage transversalement.

L'invention a ainsi pour objet un dispositif de transfert de produits selon la revendication 1, qui comprend, d'une part, un moyen d'amenée desdits produits, qui les déplace l'un derrière l'autre dans une direction d'amenée, et, d'autre part, un convoyeur de sortie, s'étendant depuis le moyen d'amenée, transversalement à la direction d'amenée.

Ce dispositif comprend, en outre, un outil rotatif autour d'un axe de rotation parallèle à la direction d'amenée, ledit outil présentant des collecteurs répartis radialement autour dudit axe et étant mobile en translation parallèlement à la direction d'amenée.

L'invention a aussi pour objet une méthode mise en oeuvre par ce dispositif, à savoir un procédé de transfert de produits selon la revendication 6 comprenant des étapes consistant à amener des produits l'un derrière l'autre dans une direction d'amenée, évacuer les produits par lots successifs d'au moins deux produits chacun, par un mouvement transversal à la direction d'amenée, et dégager les lots de produits dans une direction de sortie transversale à la direction d'amenée.

En outre, l'évacuation des produits se fait à l'aide d'un outil animé d'un mouvement rotatif autour d'un axe de rotation parallèle à la direction d'amenée et s'accompagne d'un mouvement dudit outil qui suit l'amenée des produits selon une translation parallèlement à la direction d'amenée. L'outil est animé d'un mouvement transversale à la direction d'amenée pour accompagner l'évacuation des produits vers le convoyeur de sortie.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 schématise une installation possible d'un dispositif selon l'invention
- la figure 2 montre deux états particuliers au cours du procédé, à savoir figure 2a, la prise des produits, et figure 2b, la dépose des produits, et
- la figure 3 décrit les trois étapes successives lors de la rotation de produits autour de leur axe, vue de dessus.

L'invention a donc tout d'abord comme objet un dispositif de transfert 1 de produits 2, qui comprend, d'une part, un moyen d'amenée 4 desdits produits 2, qui les déplace l'un derrière l'autre dans une direction d'amenée 3, et, d'autre part, un convoyeur de sortie 5, s'étendant depuis le moyen d'amenée 2, transversalement à la direction d'amenée 3.

Ce flux de produits entre dans le dispositif de transfert 1 par le moyen d'amenée 4, lequel moyen ou convoyeur d'amenée 4 peut être un convoyeur avec une vis d'orientation et de mise au pas du produit. Ces différents moyens d'amenée 4 ont éventuellement pour fonction, en outre, de créer un espace entre chaque lot 13 de produits. Chaque lot de produits ainsi formé par le moyen d'amenée est déplacé perpendiculairement sur un convoyeur de sortie 5.

Le dispositif de transfert 1 sert ainsi à déplacer des produits 2 depuis un moyen d'amenée 4 jusque sur un convoyeur de sortie 5 qui les déplace perpendiculairement au moyen d'amenée 4. Le moyen d'amenée 4 comprend préférablement un convoyeur à bande, sur lequel les produits 2 reposent par leur fond et s'étendent alors verticalement. Il comprend aussi éventuellement des vis ou bandes de mise ou pas voire de retournement, ou encore un dispositif pour détecter la position relative des produits 2 dans le moyen d'amenée. Le moyen d'amenée 4 peut aussi, par exemple, comprendre un système de frein, comme par exemple des bandes longitudinales à flan vertical, qui ont pour effet, par exemple, de ralentir les produits 2 par rapport au convoyeur dessous, et donc d'assurer une accumulation et une position des produits 2 l'un contre l'autre au sein de la colonne unifilaire. Le moyen d'amenée 4 peut donc, le cas échéant, avoir des moyens qui délimitent le flux de produits 2 des deux côtés. Le moyen d'amenée 4 présente cependant une portion, à savoir une extrémité en aval, où les produits 2 sont accessibles depuis le côté, pour une action par l'outil 6 comme décrit plus loin. Dans cette zone d'extrémité, ou zone d'amenée, le dispositif de transfert 1 est donc dépourvu de moyen délimitant de part et d'autre le canal dans lequel le flux de produits 2 s'écoule. C'est à partir de cette zone d'extrémité que s'étend le convoyeur de sortie 5, perpendiculairement au convoyeur que présente le moyen d'amenée 4, c'est-à-dire depuis l'un de ses bords.

Les produits 2 sont préférablement des produits 2 qui circulent avec une cadence industrielle, et ont une base plane pour leur support et un axe perpendiculaire le long duquel ils s'étendent, comme une bouteille, une canette, une boîte, un flacon, etc.

Selon l'invention, le dispositif comprend, en outre, un outil 6 rotatif autour d'un axe de rotation 7 parallèle à la direction d'amenée 3, ledit outil 6 présentant des collecteurs 8 répartis radialement autour dudit axe et étant mobile en translation parallèlement à la direction d'amenée 3, de sorte que par la rotation de l'outil 6, chaque collecteur successif dégage un groupe de produits 2 depuis le moyen d'amenée 2 jusque sur le convoyeur de sortie 5.

L'outil 6 rotatif tourne autour de son axe de rotation 7 et est positionné essentiellement au droit de la zone d'extrémité du moyen d'amenée 4, là où il rend les produits 2 accessibles depuis le côté. Comme il sera décrit encore plus loin, l'outil 6 est déplaçable dans la direction de sortie 9.

De façon générale, l'outil 6 est positionné par rapport au prolongement de la colonne de produits 2 qui entrent de sorte que le collecteur 8, qui vient contre les produits 2 sous l'effet de la rotation de l'outil 6, se trouve au moins temporairement de l'autre côté du convoyeur de sortie 5 par rapport à la colonne de produits 2 ou le lot 13 à pousser. Par exemple, l'outil est positionné avec son axe de rotation 7 environ dans le prolongement de la colonne de produits 2 déplacée par le moyen d'amenée 4, ou légèrement au-delà vers le convoyeur de sortie 5.

L'outil 6 est mobile dans la direction d'amenée 3, dans le sens du mouvement que provoque le moyen d'amenée 4 lorsqu'un collecteur 8 pousse les produits 2, et en sens inverse en vue du même déplacement pour le collecteur 8 suivant.

Le collecteur 8 suit ainsi le mouvement longitudinal, dans la direction d'amenée 3, des produits 2 dont il doit provoquer un mouvement dans la direction de sortie 9, pour les amener sur le convoyeur de sortie 5. Le collecteur 8 présente préférablement au niveau de son extrémité la plus en amont de la direction d'amenée 3, une surface d'accroche qui s'étend pour s'opposer à la progression du flux, cette surface venant s'insérer dans l'interstice créé entre deux produits 2 concaves ou entre deux produits 2 appartenant à des lots différents.

Au cours du processus, les produits 2 sont normalement amenés en continu par le moyen d'amenée 4, et l'outil 6 tourne en continu, ainsi que le convoyeur de sortie 5, qui dégage en continu les lots 13 successifs qu'extrait l'outil 6 du moyen d'amenée 4.

Un collecteur 8 sert préférablement pour agir sur plusieurs produits 2 simultanément, préférablement au moins deux.

On comprend que la rotation de l'outil 6 déplace les produits 2 perpendiculairement à la direction d'amenée 3. La direction de sortie 9 est, elle, perpendiculaire à la direction d'amenée 3.

Selon l'invention, le convoyeur de sortie 5 dégage les produits 2 dans une direction de sortie 9 perpendiculaire à la direction d'amenée 3, l'outil 6 étant déplaçable dans la direction de sortie 9, de sorte à accompagner sur une plus grande distance le mouvement des produits 2 depuis le moyen d'amenée 4 jusque sur le convoyeur de sortie 5. L'outil 6 est donc déplaçable dans les deux sens de la direction de sortie 9. On comprend qu'il se déplace dans le même sens que le convoyeur de sortie 5 lorsqu'un de ses collecteurs 8, arrivé au point d'extrémité de sa rotation, y lâche les produits 2. Il se déplace dans le sens inverse pour revenir au même point pour le cycle suivant.

Dans certains modes de réalisation, l'outil 6 dépose les produits 2 sur une surface fixe, du type plaque morte. Il recule ensuite dans la direction de sortie 9 et dans le sens inverse. Les produits 2 sont ensuite poussés par des barres du type barres de cycleur, qui forment alors éventuellement le convoyeur de sortie 5, qui convoie les produits 2 par poussée depuis leur côté. De telles barres peuvent aussi servir à pousser les produits 2 sur un convoyeur à bande, ou convoyeur de sortie.

Selon une autre caractéristique possible, chaque collecteur 8 présente une succession d'échancrures 10 l'une à côté de l'autre parallèlement à l'axe de rotation 7, chaque échancrure 10 étant destiné à recevoir un produit 2, voire plus. De façon générale, une échancrure 10 délimite un bord pour le produit 2, vers l'amont et/ou l'aval de la direction d'amenée 3, ainsi qu'un bord pour une poussée vers le convoyeur de sortie 5. Les bords peuvent avoir une forme plus ou moins spécifique et complémentaire au produit 2, ou encore être portés par des moyens de butée qui ne délimitent alors que des zones de contact.

A titre d'exemple, l'échancrure 10 peut être réalisée simplement par, d'une part, une barre s'étendant parallèlement à l'axe de rotation 7 pour former le fond de l'échancrure 10 pour la poussée vers le convoyeur de sortie 5, et, d'autre part, un doigt qui s'étend à partir de ladite barre, transversalement, et qui forme alors une butée pour le produit 2 dans son mouvement d'amenée par le moyen d'amenée 4. L'échancrure 10 a préférablement toutefois un fond qui reprend au moins partiellement la courbure du produit 2, pour un meilleur maintien.

Selon une autre caractéristique additionnelle possible, le fond de l'échancrure 10 est bombé pour une continuité du contact lors de la rotation de l'outil 6. Ainsi, le fond de l'échancrure a éventuellement une section concave, observée perpendiculairement à l'axe de rotation 7. On assure ainsi que le mouvement du collecteur 8 soit transmis au produit 2 sous forme d'une force parallèle au plan formé par la direction d'amenée 3 et la direction de sortie, à savoir essentiellement un plan horizontal.

Dans des modes de réalisation particuliers, l'échancrure 10 présente un profil qui, lors de la poussée vers le convoyeur de sortie 5 sous l'effet de la rotation de l'outil 6, favorise la rotation du produit 2 autour d'un axe perpendiculaire tant à la direction d'amenée 3 que la direction de sortie 9 du convoyeur de sortie 5. En effet, en optant pour une échancrure 10 qui peut aborder le produit 2 de façon dissymétrique par rapport à son propre axe de symétrie perpendiculaire à sa base, il est possible de provoquer une rotation du produit 2 autour dudit axe.

On peut ainsi opter pour une échancrure qui ne matérialise qu'une butée pour le produit 2 en aval par rapport à lui dans le sens de l'amenée des produits 2 et non aussi la butée amont. L'échancrure vient alors pousser le produit en créant une force non symétrique, ce qui le fera tourner.

Enfin, dans des réalisations particulières, le dispositif comprend un châssis 11 à base de poutrelles 12, et, d'une part, un premier moteur entraînant l'outil 6 en rotation autour de l'axe de rotation 7 et monté sur une première poutrelle 12 mobile parallèlement à l'axe de rotation 7, sur laquelle est fixé l'outil 6 en porte à faux, et essentiellement verticale, et, d'autre part, un deuxième moteur entraînant la première poutrelle 12 en translation le long d'une deuxième poutrelle 12, horizontale, parallèle à l'axe de rotation 7.

La deuxième poutrelle 12 définit ainsi une structure de guidage horizontal, dans la direction d'amenée, et se trouve essentiellement au-dessus de l'outil 6, lui-même au-dessus du moyen d'amenée 4 et du convoyeur de sortie 5. La première poutrelle 12, quant à elle, s'étend en porte à faux, vers le bas, depuis la deuxième poutrelle 12, et circule donc dans la direction d'amenée 3 pour permettre à l'outil de suivre le mouvement des produits 2 lorsqu'il les poussent sur le convoyeur de sortie 5. A l'autre extrémité est monté l'outil 6, mobile en rotation. Le moteur d'entraînement de l'outil 6 en rotation est préférablement embarqué sur la première poutrelle 12.

L'invention a aussi pour objet un procédé mettant en oeuvre le dispositif tel que décrit ci-dessus, à savoir un procédé de transfert de produits 2 comprenant des étapes consistant à amener des produits 2 l'un derrière l'autre dans une direction d'amenée 3, évacuer les produits 2 par lots 13 successifs d'au moins deux produits 2 chacun, par un mouvement transversal à la direction d'amenée 3, et dégager les lots 13 de produits 2 dans une direction de sortie 9 transversale à la direction d'amenée 3.

Les produits sont amenés grâce au moyen d'amenée 4, puis sont évacués dans un mouvement de balayage plan jusque sur un convoyeur de sortie 5 qui les déplace ensuite perpendiculairement. On transforme ainsi un flux unifilaire entrant, de produits 2 l'une derrière l'autre, en un flux qui évolue perpendiculairement, et qui comprend des lots 13 successifs, espacés les uns des autres le long de la direction de sortie 9. L'évacuation des produits 2 se fait au moyen de l'outil 6 rotatif ci-dessus évoqué et a pour effet de découper le flux continu de produits 2 en une séquence de lots 13 espacés.

L'évacuation de produits 2 se fait donc par lots 13, en ce sens qu'elle se fait de façon cyclique, à chaque fois pour un groupe de produits 2, ou lot 13. Comme il a déjà été mentionné, chaque cycle est assuré par un collecteur 8 ou poussoir dont l'outil 6 est muni à sa périphérie et qui agit simultanément sur plusieurs produits 2.

Le dégagement de produits 2 se fait en aval de l'évacuation et a lieu en continu, en ce sens que le convoyeur de sortie 5 peut être en permanence animé d'un mouvement. Le moyen d'amenée 4 peut, lui aussi, fonctionner en continu.

Selon l'invention, l'évacuation des produits 2 se fait à l'aide d'un outil 6 animé d'un mouvement rotatif autour d'un axe de rotation 7 parallèle à la direction d'amenée 3 et s'accompagne d'un mouvement dudit outil 6 qui suit l'amenée des produits 2, la vitesse rotation de l'outil 6 pouvant notamment être variable pour réduire voire éviter le choc sur les produits 2 à l'occasion de sa venue en contact. Le mouvement est cyclique pour accompagner l'avance des produits 2 le long de la direction d'amenée 3 alors que l'outil 6 en provoque, par sa rotation, un déplacement transversal à l'axe de rotation 7 et à la direction d'amenée 3, parallèle, à savoir l'évacuation.

Le mouvement est ainsi synchronisé : l'outil 6 se déplace à la même vitesse que le convoyeur moyen d'amenée 4 pendant au moins une partie de l'étape d'évacuation des produits 2, puis remonte en position initiale pour traiter le lot 13 suivant. Cela permet de ne pas stopper les produits 2 entre deux lots pour créer un trou pour l'insertion et le déplacement transversal d'un pousseur.

L'outil 6 est ainsi pourvue de plusieurs collecteurs 8 répartis à angles réguliers le long de sa circonférence, et chaque collecteur 8 est destiné à agir sur au moins un produit 2, grâce à au moins une échancrure 10 qui porte des surfaces de contact.

Lorsque les produits 2 sont évacués par l'outil 6 du fait de sa vitesse périphérique, ledit outil 6 se déplace de la même manière que les produits 2 dans la direction d'amenée 3 par rapport au sol : même direction, même sens et même vitesse, au moins temporairement. Un des intérêts de suivre la vitesse est de réduire le mouvement des produits 2 par rapport à la surface support à un mouvement dans la direction de sortie 9.

De façon générale, la vitesse de l'outil 6 le long de la direction d'amenée 3, lorsqu'il suit les produits 2 qu'il doit évacuer, peut correspondre à celle des produits 2 jusqu'à ce que le lot 13 à décaler ne soit plus en vis-à-vis de la colonne de produits 2 entrant, voire être supérieure si l'outil 6 veut être utilisé pour créer un espacement entre des lots 13. Il est aussi possible de réduire la vitesse de l'outil 6 pour forcer les produits 2 à pivoter sous l'effet du moyen d'amenée 4, alors en survitesse par rapport à l'outil 6. Bien entendu, comme ce mouvement le long de la direction d'amenée 3 est à effectuer à chaque cycle, l'outil 6 circule alternativement dans le même sens que les produits 2 qu'il traite, puis dans le sens inverse, pour revenir en position pour le lot suivant.

On notera que de façon préférée, le convoyeur du moyen d'amenée 4, qui peut être le moyen d'amenée 4 lui-même, est préférablement suffisamment large pour accueillir deux colonnes de produits 2 de front. En effet, il peut être avantageux de décaler le lot 13 de produits 2 transversalement par rapport à la colonne et qu'il reste en contact avec le convoyeur pendant toute l'opération d'évacuation, de sorte à éviter des changements de vitesse longitudinal trop importants.

Selon l'invention, l'outil 6 est animé d'un mouvement transversal à la direction d'amenée 3 pour accompagner l'évacuation des produits 2 vers le convoyeur de sortie 5. Ce mouvement est lui aussi cyclique, puisque l'outil 6 doit se trouver temporairement en position permettant à un collecteur 8 de sa périphérie de venir contre la colonne de produits 2, puis permettant à ce même collecteur 8 de larguer les produits 2 sur le convoyeur de sortie 5. Ce mouvement perpendiculaire à la direction d'amenée 3 peut se faire en direction du convoyeur de sortie 5 lorsqu'il s'agit d'y évacuer les produits 2. Outre le retour en position, un mouvement dans le sens inverse de la progression sur le convoyeur de sortie 5 peut être utile par exemple pour réduire la différence de vitesse le long de cette direction à l'occasion du contact entre le collecteur 8 et les produits 2.

Selon une autre caractéristique additionnelle possible, les produits 2 s'étendent verticalement, perpendiculairement tant à la direction d'amenée 3 qu'à la direction de sortie 9 qui lui est perpendiculaire, le déplacement de l'outil 6 le long de la direction d'amenée 3 lors de l'évacuation des produits 2 étant tel que la poussée de l'outil 6 par sa rotation provoque un changement d'orientation desdits produits 2 autour de leur axe vertical.

Le mouvement relatif axial le long de la direction d'amenée 3 entre l'outil 6 et la moyen d'amenée 4 est tel que l'échancrure 10 du collecteur 8 fait tourner le produit 2 autour de l'axe vertical. L'outil 6 peut ainsi, par exemple, de façon temporaire au cours du cycle, avoir une légère sous vitesse par rapport au moyen d'amenée 4, ce dernier pressant alors les produits 2 contre les échancrures, qui, étant de forme adaptée, provoquent la rotation des produits autour de l'axe vertical.

Enfin, dans certains modes de réalisation, les produits 2 sont amenés par le moyen d'amenée 4, sous forme d'un convoyeur à bande, en une colonne unifilaire s'étendant dans la direction d'amenée 4, puis sont évacués sur le convoyeur de sortie 5 par l'outil 6 en lots 13 qui, chacun, formé par la poussée transversale exercée par un collecteur 8 de l'outil 6, s'étend dans la direction d'amenée 4, et qui sont écartés l'un de l'autre sur le convoyeur de sortie 5 le long de la direction de sortie 9.

L'espacement entre deux lots successifs sur le convoyeur de sortie 5 dépend notamment de la vitesse du convoyeur de sortie 5, et de l'espacement angulaire entre deux collecteurs 8.

On peut envisager que sur le convoyeur de sortie 5, les produits 2 soient ensuite poussés par des barres transversales, du type barres entraînées par des chaînes ou barres de cycleur, qui permettent de référencer les produits 2 par poussée arrière.

Dans le mode de réalisation illustré aux figures annexées, le dispositif de transfert 1 comprend une structure fixe dans laquelle se déplacent les produits 2.

Le moyen d'amenée 4 prend préférablement la forme d'un convoyeur à bande, sur lequel reposent les produits 2. Ils se tiennent généralement l'un à la suite de l'autre en une colonne unifilaire, qui s'étend dans la direction d'amenée. Dans certains cas, le moyen d'amenée 4 comprend une paire de vis contrarotatives, qui déplacent les produits 2 grâce à leur filet. Les filets peuvent être de forme changeante au cours de l'avance du produit 2, dans le but de provoquer la rotation des produits 2, notamment des produits 2 à base non circulaire.

Le moyen d'amenée 4 amène donc des produits 2 l'un derrière l'autre dans une zone d'extrémité à partir de laquelle ils vont être poussés sur un convoyeur de sortie 5 qui s'étend depuis ladite zone, dans une direction perpendiculaire à la direction d'amenée 3 et nommée direction de sortie 9.

Le convoyeur de sortie 5 s'étend perpendiculairement au moyen d'amenée 4, c'est-à-dire perpendiculairement à la direction d'amenée 3. Le convoyeur de sortie 5 s'étend depuis un bord du convoyeur que le moyen d'amenée 4 amène en zone d'extrémité, le cas échéant. Une bande fixe peut être utilisée pour couvrir la rainure formée entre le bord du moyen d'amenée 4 et le rouleau de renvoi du convoyeur de sortie 5.

Ainsi, le dispositif de transfert 1 reçoit, en entrée, les produits 2 sous forme d'une colonne qui s'étend dans la direction d'amenée 3 au niveau du moyen d'amenée 4, et délivre, en sortie, sur le convoyeur de sortie 5, des lots 13, séparés l'un de l'autre sur le convoyeur de sortie 5 dans la direction de sortie 9, chacun comprenant au moins un produit 2 et préférablement au moins deux alignés dans le sens de la direction d'amenée 3. En aval de ce dispositif de transfert 1, les produits 2 en lot 13 sont éventuellement séparés dans des couloirs de circulation parallèles à la direction de sortie 9, ou encore regroupés l'un contre l'autre par groupe pour former une matrice de produits 2 prête à être conditionnée, par fardelage, encaissage, ou autres.

Cette transformation qu'opère le dispositif de transfert 1 depuis un flux unifilaire compact s'étendant dans la direction d'amenée 3 jusqu'à un flux plurifilaire transversal de produits 2 séparés, s'opère grâce à un outil 6 décrit ci-dessous, qui travaille dans la zone d'extrémité où les produits 2 sont amenés par le moyen d'amenée 4.

En fonctionnement, ledit outil 6 est animé d'un mouvement de rotation contrôlée autour d'un axe de rotation 7 parallèle à la direction d'amenée. Il présente donc par exemple une platine tournante, positionnée en aval du moyen d'amenée 4, et à partir de laquelle s'étendent des collecteurs 8. Chaque collecteur 8 s'étend parallèlement à l'axe de rotation 7, et donc à la direction d'amenée 3, depuis la platine, et en porte à faux. L'outil 6 développe donc un parcours tubulaire au niveau de ses collecteurs 8. Chaque collecteur 8, sous l'effet de la rotation de l'outil 6, exerce, sur les produits 2 délivrés par le moyen d'amenée 3, une force de poussée qui les dégage transversalement sur le convoyeur de sortie 5 depuis la zone d'amenée.

Chaque collecteur 8 a ainsi la largeur suffisante pour pousser plusieurs produits 2 en une fois. A cet effet, dans des modes de réalisation possibles, le collecteur 8 peut être muni de surfaces de référencement pour chaque produit 2 séparément, encore nommées échancrures 10. Une échancrure 10 permet ainsi de limiter le mouvement d'un produit 2 parallèlement à la direction de sortie 9 ainsi que de pousser le produit par la rotation de l'outil. L'échancrure 10 peut avoir un profil exactement complémentaire à la forme du produit 2 ou encore ne présenter que des points ou surfaces de référence, par exemple définies par des blocs montés sur le collecteur 8, éventuellement des blocs mobiles à des fins de réglage.

On comprend que l'outil 6 est positionné de sorte que lorsqu'un collecteur 8 est en position basse, il arrive à la hauteur des produits 2 qui se trouvent dans la zone d'amenée, de sorte à pouvoir les pousser latéralement.

L'outil 6 a plusieurs collecteurs 8 répartis régulièrement et espacés l'un par rapport à l'autre d'un angle prédéfini, garantissant un bon équilibrage. L'outil 6 se trouve dans le prolongement du moyen d'amenée 4 et agit au niveau de la zone d'amenée où la position des produits n'est plus délimitée sur les côtés.

Le moyen d'amenée 4 comprend généralement un convoyeur à bande qui s'étend jusqu'à une zone d'extrémité ou zone d'amenée, au droit de laquelle circulent les collecteurs 8 de l'outil 6. Ainsi, les produits 2 continuent à avancer dans la direction d'amenée 3 alors même qu'ils sont poussés transversalement vers le convoyeur de sortie 5 par l'outil 6. En outre, dans le but d'atteindre des cadences élevées, le moyen d'amenée 4 fonctionne en continu. Dans certaines configurations toutefois, le moyen d'amenée 4 crée éventuellement lui-même un léger espace longitudinal entre les lots 13 que l'outil 6 va décaler.

Afin d'éviter que la poussée transversale des produits 2 par le collecteur 8 ne déstabilise les produits 2, tant ceux encore en amont que ceux qu'il pousse, l'outil 6 est animé d'un mouvement le long de la direction d'amenée 3, pour suivre le mouvement des produits 2 par rapport au sol. Ainsi, lorsque l'un de ses collecteurs 8 agit sur les produits 2, l'outil 6 tout entier suit le mouvement que le moyen d'amenée 3 fait subir aux produits 2, c'est-à-dire qu'il avance comme eux dans le même sens dans cette direction. Comme décrit plus loin, de légères variations de vitesse sont possibles.

Le collecteur 8 au contact des produits 2 déplacés par le moyen d'amenée 4 se déplace ainsi, au moins temporairement, à la même vitesse que le convoyeur que comprend ce dernier, dans les modes de réalisation correspondants.

L'outil 6 est donc animé d'un mouvement cyclique d'aller et retour le long de la direction d'amenée 3 : il avance dans le même sens que les produits 2 lorsqu'un collecteur 8 transfère des produits 2, puis avance dans le sens inverse pour chercher le lot 13 suivant. Dans certains modes de réalisation, ce mouvement longitudinal de l'outil 6 le long de la direction d'amenée 3 et dans le sens d'avance des produits 2 s'arrête une fois que les produits 2 sont arrivés sur le convoyeur de sortie 5. On évite ainsi des mouvements relatifs dangereux entre les produits 2 et leur moyen de convoyage par le fond, c'est-à-dire moyen d'amenée 4 puis convoyeur de sortie 5.

Plus précisément, il est envisageable d'arrêter le mouvement longitudinal de l'outil 6 dans la direction d'amenée 3 et dans le sens de circulation des produits 2 dès lors que le collecteur 8 qui pousse les produits 2 ne se trouve plus en vis-à-vis de la colonne de produits 2 à traite ensuite. Le produit 2 le plus en amont du lot 13 décalé par le collecteur 8 peut alors se faire rattraper puis dépasser par le produit 2 le plus en aval de la colonne de produits 2 à traiter par la suite.

Grâce à ce mouvement cyclique montant et descendant la colonne de produits 2 entrant, on évite de déstabiliser les produits 2 ou encore de les bloquer lorsque le collecteur 8 vient en action. La cadence est aussi bien meilleure. Préférablement, au moins au début de l'action du collecteur 8, celui-ci circule avec la même vitesse que les produits 2 entraînés par le moyen d'amenée 4.

On comprend que le transfert transversal des produits 2 depuis le moyen d'amenée 4 jusque sur le convoyeur de sortie 5 se fait par le mouvement périphérique de poussée des collecteurs 8 successifs, chaque mouvement formant un lot 13. Afin d'éviter que la mise en contact entre le collecteur 8 et les produits 2 du lot 13 à décaler les déstabilise, et selon une caractéristique possible, la vitesse de déplacement des collecteurs 8 par rapport aux produits 2, dans la direction de sortie 9, est réduite au moment où le collecteur 8 arrive au contact des produits 2. On crée ainsi une accélération transversale, le long de la direction de sortie 9, suffisamment faible pour que les produits 2 ne subissent pas l'équivalent d'un choc.

Préférablement, l'outil 6 a sa vitesse de rotation diminuée lorsqu'un collecteur arrive au contact des produits 2 par rapport à celle qu'il a autrement. Sa rotation est donc à vitesse variable.

Dans des cas réalisations particulières, l'outil 6 peut, en outre, se déplacer parallèlement à la direction de sortie 9. Cela peut être utilisé pour, par exemple, réduire la vitesse du collecteur 8 lors du contact : l'outil 6 peut alors être animé d'une vitesse de rotation constante, mais c'est son mouvement le long de la direction de sortie 9 qui ajuste la vitesse du collecteur 8 par rapport au produit 2 le long de la direction de sortie 9.

Cette possibilité de déplacement de l'outil 6, c'est-à-dire de son axe de rotation 7, dans la direction de sortie 9, permet aussi une plus grande amplitude du déplacement des produits 2 depuis la colonne qu'ils forment avec le moyen d'amenée 4 jusqu'aux lots 13 décalés sur le côté, et ce même avec un outil 6 dont la distance entre l'axe de rotation 7 et les collecteurs 8, c'est-à-dire le rayon, est faible.

L'architecture du dispositif de transfert 1 peut alors comprendre un châssis 11 à base, par exemple, de poutrelles 12. On prévoit un premier moteur d'entraînement pour provoquer la translation d'un ensemble le long de la direction de sortie 9. Au sein de cet ensemble, on prévoit un deuxième moteur, qui est donc mobile compte tenu du mouvement précédemment décrit, ce deuxième moteur assurant le mouvement d'un module dans la direction d'amenée 3. Préférablement, ce module circule le long d'une poutrelle 12 horizontale, orientée dans la direction d'amenée 3, et comprend une poutrelle 12 verticale, dont la base d'extrémité supérieure sert de base au guidage. Ce module comprend enfin, quant à lui, un troisième moteur, animé des mouvements décrits le long de la direction d'amenée 3 et le long de la direction de sortie 9. Ce troisième moteur entraîne quant à lui l'outil 6 proprement dit en rotation autour de son axe de rotation 7.

On comprend que dans certaines configurations, le premier moteur n'est pas utile et que l'ensemble qu'il rend mobile le long de la direction de sortie 9 est alors fixe par rapport à elle. En outre, la séquence des mouvements par rapport au sol peut être différente de celle décrite ci-dessus : le premier moteur sert à déplacer un ensemble dans la direction d'amenée, le deuxième à le déplacer dans la direction de sortie, etc. De façon générale, les mouvements linéaires sont assurés par des guidages linéaires du type glissières, montés dans les poutrelles 12 du châssis 11.

Dans certaines réalisations, le collecteur 8 présente une échancrure 10 par produit 2 à entraîner sur le côté. Cette échancrure est plus ou moins de forme complémentaire au produit 2. L'outil 6 peut alors être piloté dans son mouvement le long de la direction d'amenée 3 pour provoquer la rotation du produit 2 autour d'un axe perpendiculaire au plan de son support et donc normalement vertical.

En effet, la direction d'amenée 3 et la direction de sortie 9 définissent un plan normalement horizontal. Dans certaines configurations, le produit 2 peut avoir une section horizontale qui présente une dissymétrie de sorte qu'il est possible de définir une position angulaire d'un tel produit 2 autour de l'axe vertical. Dans de tels cas, il peut être nécessaire de tourner les produits 2 entre la position qu'ils ont lorsqu'ils sont sur le moyen d'amenée 4 et la position qu'ils doivent avoir sur le convoyeur de sortie 5, ce qui est notamment décrit dans les figures annexées.

L'échancrure 10 peut en effet comprendre un bord d'extrémité, par exemple l'extrémité d'un bec dont le côté est destiné à retenir le produit 2 dans son mouvement parallèle à la direction d'amenée 3. Lorsque le collecteur 8 arrive sur les produits 2 à déplacer, sa position relative est telle que ce bord d'extrémité vient non pas au-delà du produit 2 comme c'est le cas une fois le produit 2 stabilisé dans l'échancrure, mais vient contre le produit 2, entre son axe de symétrie verticale et son bord le plus proche.

La rotation de l'outil 6 a alors pour effet d'exercer une force qui n'est pas symétrique par rapport à l'axe de symétrie verticale du produit 2 ce qui provoque la rotation du produit 2 autour de l'axe vertical, voir la figure. Ce mouvement de rotation de l'outil 6 se poursuit jusqu'à tourner le produit 2 éventuellement d'un quart de tour, ce qui permet de faire passer des produits 2 initialement orientés avec leur bord long parallèle à la direction d'amenée 4 à une orientation avec leur bord long perpendiculaire à cette direction.

On comprend que ce mouvement de rotation de l'outil 6 autour de son axe de rotation 7 à des fins de rotation de produit 2 peut s'accompagner d'un mouvement relatif entre les produits 2 et l'outil 6 dans la direction d'amenée 4. Par exemple, le collecteur 8 peut initialement circuler le long de la direction d'amenée 3 avec la même vitesse que les produits 2, puis, pour terminer la rotation autour de l'axe vertical, continuer avec une vitesse légèrement plus faible, ce qui aura pour effet que le moyen d'amenée 4, plus précisément le convoyeur à bande sur lequel ils reposent, forcera par son action les produits 2 contre une surface de l'échancrure 10 qui pourra terminer la rotation du produit 2.

En outre, préférablement, l'échancrure 10, et plus généralement le collecteur 8 au niveau de sa surface destinée à être en contact avec le produit 2, présente un profil bombé, ce qui a pour effet d'assurer que la force exercée par le collecteur 8 sur le produit 2 est toujours, au moins autant que possible, dans le plan formé par la direction de sortie 9 et la direction d'amenée 3.

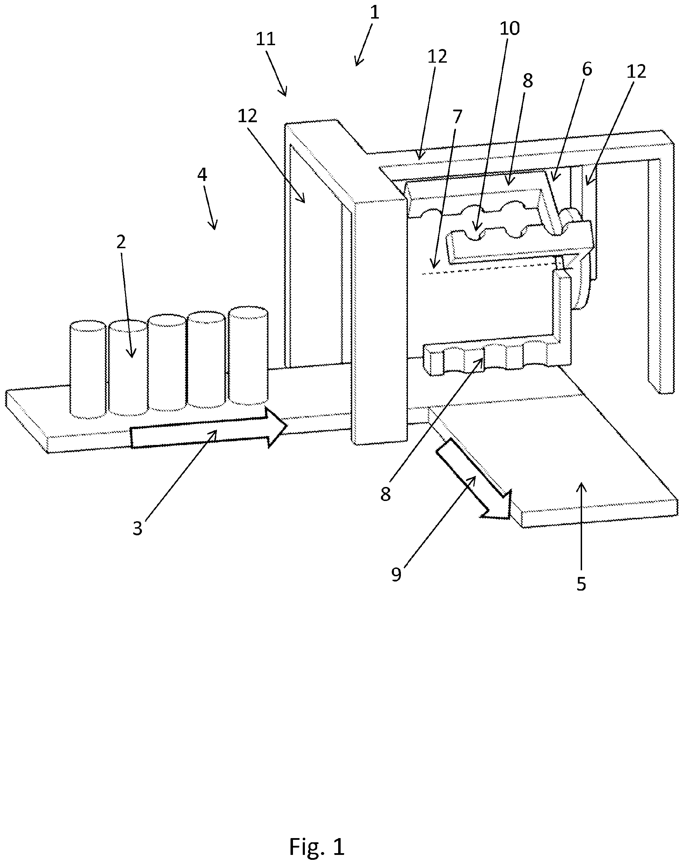

Comme représenté sur la figure 1, un dispositif de transfert 1 comprend un moyen d'amenée 4 de produits 2 qui proviennent, par exemple, d'une machine de préparation située en amont du dispositif de transfert 1 comme une machine de remplissage ou une machine d'étiquetage, non représentée sur la figure 1.

Les produits 2 arrivent en ligne, sur une file, par le moyen d'amenée 4 tel qu'un convoyeur à chaine ou bande sans fin, suivant une direction d'amenée 3.

A l'extrémité amont du moyen d'amenée, non représentée sur la figure 1, peut se trouver un dispositif de mise au pas afin de créer un espacement dans la file de produits ou un dispositif d'orientation des produits afin de faire tourner le produit suivant son axe vertical tel qu'une vis de mise au pas ou d'orientation de produits.

A l'extrémité avale du moyen d'amenée se trouve un convoyeur de sortie 9 orienté transversalement au moyen d'amenée 4 et donc à la direction d'amenée 3 des produits. Ce convoyeur de sortie 5 alimente une machine, non représentée, en lot de produits. Cette machine située en aval peut notamment être une fardeleuse.

A l'extrémité avale du moyen d'amenée 4, les produits 2 sont transférés du moyen d'amenée vers le convoyeur de sortie 5 par le dispositif de transfert 1.

Le dispositif de transfert comprend un outil 6 rotatif autour d'un axe de rotation 7 parallèle à la direction d'amenée 3.

Cet outil 6 comprend des collecteurs 8 destinés à recevoir des lots 13 de produits 7. Ils sont répartis radialement autour de l'axe de rotation 7 et parallèles à la direction d'amenée des produits.

Le collecteur 8 est une pièce personnalisable que l'on peut changer ou ajuster, notamment par réglage, en fonction des lots 13 de produits à former et à transférer.

Chaque collecteur se présente sous la forme d'une succession d'échancrures 10, l'une à côté de l'autre et parallèle à l'axe de rotation 7 ou sous la forme d'une barre de poussée, poussant tous les produits en même temps jusque sur le convoyeur de sortie 5 ou sur une plaque morte d'où ils seront pris par un élément du type cycleur à barres, par exemple.

Dans le mode de réalisation où le collecteur est équipé d'échancrures, elles ont la forme du produit qu'elles vont capter pour ensuite réaliser le transfert.

En général, le fond de ces échancrures est bombé pour augmenter la continuité du contact avec la base du produit à saisir.

L'outil est également mobile en translation parallèlement à la direction d'amenée 3 des produits 2. Ce mouvement de translation de l'outil sera décrit dans la suite de la description.

Pour effectuer ces différents mouvements de rotation et de translation, l'outil 6 est mobile, porté et guidé par une structure porteuse qui comprend un châssis 11 fixe formé de poutrelles 12 situé en partie au-dessus du moyen d'amenée 4 et également situé en partie au-dessus du convoyeur de sortie 5 afin de faciliter le transfert du lot de produits entre le moyen d'amenée et le convoyeur de sortie.

Un premier moteur, non représenté, entraîne l'outil 6 en rotation autour de l'axe de rotation 7. Ce moteur est monté sur une première poutrelle 12 verticale, sur laquelle est fixé l'outil 6 en porte à faux, et au-dessus du moyen d'amenée 4.

Un deuxième moteur, non représenté, entraîne en translation l'outil fixé sur la première poutrelle 12, le long d'une poutrelle 12, horizontale, parallèle à l'axe de rotation 7 et à la direction d'amenée des produits.

Un troisième moteur entraine en translation l'outil fixé sur la première poutrelle 12, le long d'une poutrelle 12 horizontale, parallèle à la direction de sortie 9.

Le fait d'avoir un moteur par mouvement permet de faire varier la vitesse du collecteur durant le procédé et d'avoir une grande flexibilité.

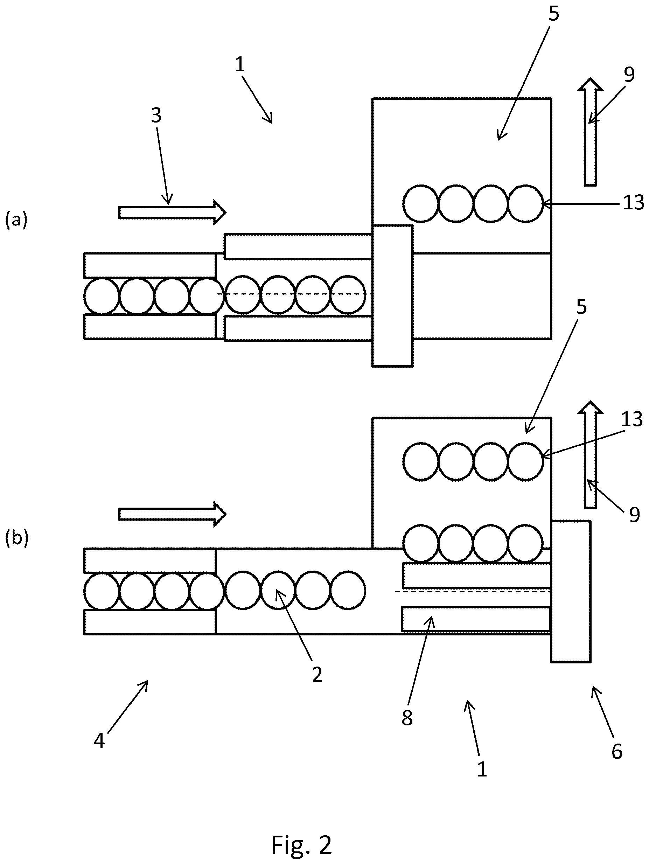

Les figures 2a et 2b décrivent les étapes du fonctionnement du dispositif de transfert 1.

A l'extrémité amont du moyen d'amenée 4, sur les figures 2a et 2b, est représenté un dispositif de mise au pas tel qu'un cadenceur qui peut être constitué soit d'un couple de vis sans fin en vis-à-vis ou soit d'un couple de chaines ou bandes sans fin en vis-à-vis. Ce cadenceur intervient en amont du dispositif de transfert 1 de produits et en aval de la machine de préparation des produits.

Ce cadenceur a pour fonction de compacter le flux voire aussi, le cas échéant, de créer un espacement entre chaque lot 13 de produits 2 qui sera ensuite capté par un collecteur 8. Cet espacement est réalisé en réduisant la vitesse du cadenceur par rapport la vitesse du moyen d'amenée 4.

Cet espacement a pour fonction de créer le lot de produits afin de faciliter l'introduction du collecteur dans la file de produits.

Comme représenté sur la figure 2a, l'outil 6 s'est translaté en direction du cadenceur afin de remonter la file de produits jusqu'à l'extrémité avale du cadenceur. Puis, un des collecteurs 8 s'est synchronisé avec le lot de produits à capter, c'est-à-dire que le collecteur s'est mis à la vitesse du moyen d'amenée 4 dans la direction d'amenée 3 du lot 13 de produits. Par contre, au moment du contact entre les produits et le collecteur, la vitesse de rotation du collecteur est faible, éventuellement presque nulle, afin d'éviter tout déséquilibre des produits captés. Enfin, une fois le captage et l'évacuation du lot de produits réalisés, l'outil reprend une certaine vitesse de rotation combinée à une vitesse de translation du collecteur pour remonter le lot de produit vers l'aval du moyen d'amenée et cela préférablement avec une vitesse de translation du collecteur supérieur à la vitesse du convoyeur d'amenée.

Le mouvement de translation de l'outil 6 le long de la direction d'amenée contribue à augmenter la cadence de fonctionnement de ce dispositif de transfert.

Comme représenté sur la figure 2b, l'outil 6 a remonté la file de produits vers l'aval du moyen d'amenée et par le mouvement de rotation du collecteur, le lot de produits a été déposé sur le convoyeur de sortie 9.

Dans un mode de réalisation préférentiel, l'outil 6 peut également effectuer un mouvement transversal par rapport à la direction d'amenée 3 des produits.

Ce mouvement transversal contribue à faciliter la dépose des produits et à augmenter la plage des produits qui peuvent être traités avec un même type d'outil.

Une fois l'étape de dépose du lot de produits effectuée, le collecteur recommence le cycle précédemment décrit.

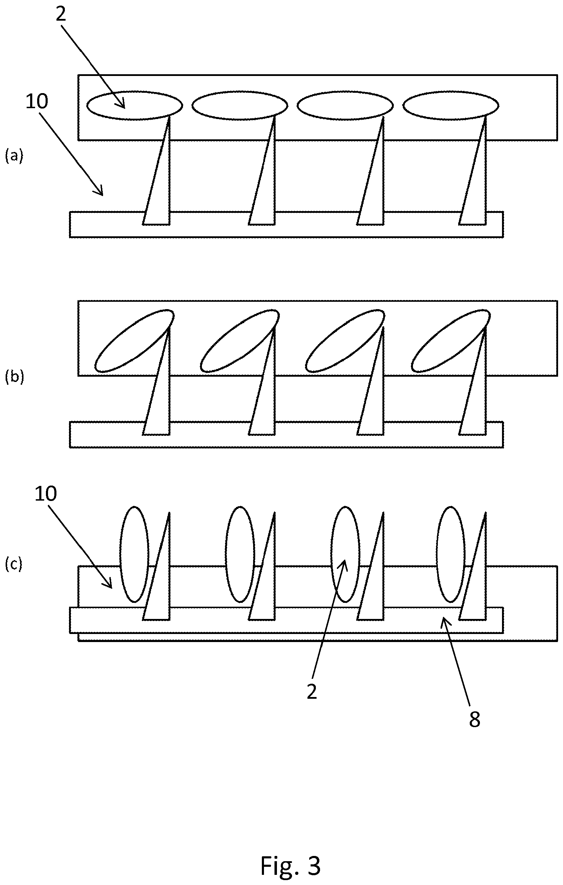

Les figures 3a, 3b et 3c décrivent les étapes du procédé d'orientation des produits de forme particulières, autres que cylindriques ou dont la section est identique à elle-même une fois tournée d'une portion de tour.

Lors de la mise en oeuvre de ce procédé d'orientation, la vitesse du moyen d'amenée 4 et la vitesse du collecteur 8 suivant la direction d'amenée 3 sont sensiblement identiques. Toutefois, en fonction du produit à faire pivoter, la vitesse peut varier.

Comme représenté sur la figure 3a, les produits 2 sont en ligne, sur une file, sur le moyen d'amenée 4 suivant une direction d'amenée 3. Le collecteur 8 est situé parallèlement à la direction d'amenée, et en vis-à-vis des produits à orienter.

Dans ce mode de réalisation, les échancrures 8 ont la forme d'un triangle dont le sommet est formé de deux bords. Ce sommet pointe vers les produits à orienter lorsque le collecteur 8 s'en approche. Selon la direction d'amenée 3, le bord amont formant le sommet est le bord sur lequel le produit va rouler pour s'orienter.

Comme représenté sur les figure 3b et 3c, le collecteur se translate transversalement par rapport à la direction d'amenée 4 des produits. Ce mouvement de translation est généré par le mouvement de rotation de l'outil 6, voire par le mouvement additionnel de l'outil 6 dans cette direction. Ce mouvement de translation de l'échancrure 10 provoque la rotation des produits simultanément suivant leurs axes verticaux en poussant sur l'extrémité avale du produit 2. En d'autres termes, le mouvement de translation de l'échancrure provoque la rotation du produit suivant son axe vertical en faisant rouler le produit sur le bord amont du sommet de l'échancrure.

Ce dispositif de rotation de produit permet de supprimer la vis en amont servant à retourner les produits. Les vis de retournement sont des outillages dédiés à la forme des produits à retourner. Elles sont lourdes, imposantes et de conception spécifiques. En outre, elles provoquent souvent des griffures, rayures ou autres dégradations de la surface du produit et de son étiquette. La rotation du produit par l'outil lui-même contribue à éliminer ces problèmes.

Grâce à l'invention, il est ainsi possible d'extraire en continu des groupes de produits depuis une file, ce avec une cadence élevée, et sans déstabiliser les produits ni ne requérir de dispositif amont pour créer un espacement entre les groupes ou lots successifs.

## Revendications

1. Dispositif de transfert (1) de produits (2), qui comprend, d'une part, un moyen d'amenée (4) desdits produits (2), qui les déplace l'un derrière l'autre dans une direction d'amenée (3), et, d'autre part, un convoyeur de sortie (5), s'étendant depuis le moyen d'amenée (2), transversalement à la direction d'amenée (3),
dispositif de transfert comprenant, en outre, un outil (6) rotatif autour d'un axe de rotation (7) parallèle à la direction d'amenée (3), ledit outil (6) présentant des collecteurs (8) répartis radialement autour dudit axe et étant mobile en translation parallèlement à la direction d'amenée (3) et ledit convoyeur de sortie (5) s'étend dans une direction de sortie (9) perpendiculaire à la direction d'amenée (3), et **caractérisé en ce que** ledit outil (6) est déplaçable dans la direction de sortie (9).

2. Dispositif selon la revendication 1, où
chaque collecteur (8) présente une succession d'échancrures (10) l'une à côté de l'autre parallèlement à l'axe de rotation (7), chaque échancrure (10) étant destiné à recevoir un produit (2), voire plus.

3. Dispositif selon la revendication 2, où
le fond de l'échancrure (10) est bombé pour une continuité du contact lors de la rotation de l'outil (6).

4. Dispositif selon l'une quelconque des revendications 2 ou 3, où
l'échancrure (10) présente un profil qui, lors de la poussée vers le convoyeur de sortie (5) sous l'effet de la rotation de l'outil (6), favorise la rotation du produit (2) autour d'un axe perpendiculaire tant à la direction d'amenée (3) que la direction de sortie (9) du convoyeur de sortie (5), ladite rotation du produit (2) étant provoquée du fait que ladite échancrure (10) peut aborder le produit (2) de façon dissymétrique par rapport à son propre axe de symétrie perpendiculaire à sa base.

5. Dispositif selon l'une quelconque des revendications 1 à 4, **caractérisé en ce que**
il comprend un châssis (11) à base de poutrelles (12), et, d'une part, un premier moteur entraînant l'outil (6) en rotation autour de l'axe de rotation (7) et monté sur une première poutrelle (12) mobile parallèlement à l'axe de rotation (7), sur laquelle est fixé l'outil (6) en porte à faux, et essentiellement verticale, et, d'autre part, un deuxième moteur entraînant la première poutrelle (12) en translation le long d'une deuxième poutrelle (12), horizontale, parallèle à l'axe de rotation (7).

6. Procédé de transfert de produits (2) comprenant des étapes consistant à amener des produits (2) l'un derrière l'autre dans une direction d'amenée (3), évacuer les produits (2) par lots (13) successifs d'au moins deux produits (2) chacun, par un mouvement transversal à la direction d'amenée (3), et dégager les lots (13) de produits (2) dans une direction de sortie (9) transversale à la direction d'amenée (3), procédé **caractérisé en ce que**
l'évacuation des produits (2) se fait à l'aide d'un outil (6) animé d'un mouvement rotatif autour d'un axe de rotation (7) parallèle à la direction d'amenée (3) et **caractérisé en ce que** ledit mouvement rotatif s'accompagne d'un mouvement dudit outil (6) qui suit l'amenée des produits (2) selon une translation parallèlement à la direction d'amenée (3) et **en ce que**
l'outil (6) est animé d'un mouvement transversal à la direction d'amenée (3) pour accompagner l'évacuation des produits (2) vers le convoyeur de sortie (5).

7. Procédé selon la revendication 6, **caractérisé en ce que**
les produits (2) s'étendent verticalement, perpendiculairement tant à la direction d'amenée (3) qu'à la direction de sortie (9) qui lui est perpendiculaire, le déplacement de l'outil (6) le long de la direction d'amenée (3) lors de l'évacuation des produits (2) étant tel que la poussée de l'outil (6) par sa rotation provoque un changement d'orientation desdits produits (2) autour de leur axe vertical.

8. Procédé selon l'une quelconque des revendications 6 à 7, où
les produits (2) sont amenés par le moyen d'amenée (4), sous forme d'un convoyeur à bande, en une colonne unifilaire s'étendant dans la direction d'amenée (4), puis sont évacués sur le convoyeur de sortie (5) par l'outil (6) en lots (13) qui, chacun, formé par la poussée transversale exercée par un collecteur (8) de l'outil (6), s'étend dans la direction d'amenée (4), et qui sont écartés l'un de l'autre sur le convoyeur de sortie (5) le long de la direction de sortie (9).

## Patentansprüche

1. Transfervorrichtung (1) für Produkte (2), die einerseits ein Zuführmittel (4) für die Produkte (2), welches diese hintereinander in einer Zuführrichtung (3) bewegt, und andererseits einen Ausgangsförderer (5), der sich quer zu der Zuführrichtung (3) von dem Zuführmittel (2) erstreckt, beinhaltet,
wobei die Transfervorrichtung ferner ein um eine Rotationsachse (7) parallel zu der Zuführrichtung (3) rotierendes Werkzeug (6) beinhaltet, wobei das Werkzeug (6) Aufnahmeeinheiten (8) aufweist, die radial um die Achse verteilt sind und parallel zu der Zuführrichtung (3) translatorisch beweglich sind, und wobei sich der Ausgangsförderer (5) in einer zu der Zuführrichtung (3) senkrechten Ausgangsrichtung (9) erstreckt, und **dadurch gekennzeichnet, dass** das Werkzeug (6) in der Ausgangsrichtung (9) bewegbar ist.

2. Vorrichtung nach Anspruch 1, wobei
jede Aufnahmeeinheit (8) parallel zu der Rotationsachse (7) eine Folge von nebeneinander liegenden Aussparungen (10) aufweist, wobei jede Aussparung (10) dazu bestimmt ist, ein Produkt (2) oder auch mehrere aufzunehmen.

3. Vorrichtung nach Anspruch 2, wobei
der Boden der Aussparung (10) zwecks eines kontinuierlichen Kontakts während der Rotation des Werkzeugs (6) gewölbt ist.

4. Vorrichtung nach einem beliebigen der Ansprüche 2 oder 3, wobei
die Aussparung (10) ein Profil aufweist, das während des Schubs hin zu dem Ausgangsförderer (5) unter Einwirkung der Rotation des Werkzeugs (6) die Rotation des Produkts (2) um eine Achse, die sowohl zu der Zuführrichtung (3) als auch der Ausgangsrichtung (9) des Ausgangsförderers (5) senkrecht ist, begünstigt, wobei die Rotation des Produkts (2) dadurch bewirkt wird, dass sich die Aussparung (10) dem Produkt (2) in Bezug auf dessen eigene Symmetrieachse senkrecht zu seiner Basis auf asymmetrische Weise annähern kann.

5. Vorrichtung nach einem beliebigen der Ansprüche 1 bis 4, **dadurch gekennzeichnet, dass**
sie Folgendes beinhaltet: ein Gestell (11) auf Basis von Trägern (12) und einerseits einen ersten Motor, der das Werkzeug (6) rotatorisch um die Rotationsachse (7) antreibt und an einem ersten Träger (12) montiert ist, der parallel zu der Rotationsachse (7) beweglich ist und an dem das Werkzeug (6) freitragend und im Wesentlichen vertikal befestigt ist, und andererseits einen zweiten Motor, der den ersten Träger (12) translatorisch entlang eines zweiten, horizontalen Trägers (12) parallel zu der Rotationsachse (7) antreibt.

6. Transferverfahren für Produkte (2), das Schritte beinhaltet, die darin bestehen, Produkte (2) hintereinander in einer Zuführrichtung (3) zuzuführen, die Produkte (2) durch eine zu der Zuführrichtung (3) quer verlaufende Bewegung in aufeinanderfolgenden Chargen (13) von jeweils mindestens zwei Produkten (2) abzuführen und die Chargen (13) von Produkten (2) in einer zu der Zuführrichtung (3) quer verlaufenden Ausgangsrichtung (9) abzutransportieren, wobei das Verfahren **dadurch gekennzeichnet ist, dass**
die Abfuhr der Produkte (2) mit Hilfe eines Werkzeugs (6) erfolgt, das eine Rotationsbewegung um eine Rotationsachse (7) parallel zu der Zuführrichtung (3) ausführt, und **dadurch gekennzeichnet, dass** die Rotationsbewegung von einer Bewegung des Werkzeugs (6) begleitet wird, die der Zufuhr der Produkte (2) gemäß einer Translation parallel zu der Zuführrichtung (3) folgt, und dass
das Werkzeug (6) eine zu der Zuführrichtung (3) quer verlaufende Bewegung ausführt, um die Abfuhr der Produkte (2) hin zu dem Ausgangsförderer (5) zu begleiten.

7. Verfahren nach Anspruch 6, **dadurch gekennzeichnet, dass**
sich die Produkte (2) vertikal und senkrecht sowohl zu der Zuführrichtung (3) als auch der Ausgangsrichtung (9), die zu dieser senkrecht ist, erstrecken, wobei die Bewegung des Werkzeugs (6) entlang der Zuführrichtung (3) während der Abfuhr der Produkte (2) derart ist, dass der Schub des Werkzeugs (6) durch seine Rotation eine Änderung der Ausrichtung der Produkte (2) um ihre vertikale Achse bewirkt.

8. Verfahren nach einem beliebigen der Ansprüche 6 bis 7, wobei
die Produkte (2) durch das Zuführmittel (4) in Form eines Bandförderers in einer einzelnen Reihe, die sich in der Zuführrichtung (4) erstreckt, zugeführt werden und dann durch das Werkzeug (6) auf den Ausgangsförderer (5) in Chargen (13) abgeführt werden, die sich, gebildet durch den von einer Aufnahmeeinheit (8) des Werkzeugs (6) ausgeübten Querschub, jeweils in der Zuführrichtung (4) erstrecken und die auf dem Ausgangsförderer (5) entlang der Ausgangsrichtung (9) voneinander beabstandet sind.

## Claims

1. Device (1) for transferring products (2), which comprises, on the one hand, a means (4) for feeding said products (2), which moves them one behind the other in a feed direction (3), and, on the other hand, an output conveyor (5), extending from the feed means (2), transversely to the feed direction (3),
the transfer device comprising, furthermore, a tool (6) able to rotate about a rotation axis (7) parallel to the feed direction (3), said tool (6) having collectors (8) distributed radially around said axis and being able to move in translation parallel to the feed direction (3) and said output conveyor (5) extending in an output direction (9) perpendicular to the feed direction (3), and **characterized in that** said tool (6) is movable in the output direction (9).

2. Device according to Claim 1, wherein
each collector (8) has a succession of notches (10) next to one another parallel to the rotation axis (7), each notch (10) being intended to receive one product (2), or even more.

3. Device according to Claim 2, wherein
the bottom of the notch (10) is domed for continuity of contact during the rotation of the tool (6).

4. Device according to either one of Claims 2 or 3, wherein
the notch (10) has a profile that, during pushing towards the output conveyor (5) under the effect of the rotation of the tool (6), favours rotation of the product (2) about an axis perpendicular both to the feed direction (3) and the output direction (9) of the output conveyor (5), said rotation of the product (2) being caused by the fact that said notch (10) may approach the product (2) in an asymmetric manner with respect to its own axis of symmetry perpendicular to its base.

5. Device according to any one of Claims 1 to 4, **characterized in that**
it comprises a chassis (11) based on beams (12), and, on the one hand, a first motor driving the tool (6) in rotation about the rotation axis (7) and mounted on a first beam (12) that is able to move parallel to the axis of rotation (7), to which the tool (6) is fastened in a cantilevered manner, and that is essentially vertical, and on the other hand, a second motor driving the first beam (12) in translation along a second beam (12), which is horizontal, parallel to the axis of rotation (7).

6. Method for transferring products (2) comprising steps consisting in feeding products (2) one behind the other in a feed direction (3), discharging the product (2) in successive batches (13) of at least two products (2) each, via a movement transverse to the feed direction (3), and releasing said batches (13) of products (2) in an output direction (9) transverse to the feed direction (3), which method is **characterized in that**
the discharging of the products (2) is done using a tool (6) made to carry out a rotary movement about a rotation axis (7) parallel to the feed direction (3) and **characterized in that** said rotary movement is accompanied by a movement of said tool (6) that follows the feeding of the products (2) in a translational movement parallel to the feed direction (3) and **in that**
the tool (6) is made to carry out a movement transverse to the feed direction (3) so as to accompany the discharging of the products (2) towards the output conveyor (5).

7. Method according to Claim 6, **characterized in that** the products (2) extend vertically, perpendicular both to the feed direction (3) and to the output direction (9) that is perpendicular thereto, the movement of the tool (6) along the feed direction (3) during the discharging of the products (2) being such that the pushing of the tool (6) by its rotation causes a change in orientation of said products (2) about their vertical axis.

8. Method according to either one of Claims 6 and 7, wherein
the products (2) are fed by the feed means (4), in the form of a belt conveyor, in a single-file column extending in the feed direction (4), then are discharged onto the output conveyor (5) by the tool (6) in batches (13) that, each, formed by the transverse pushing exerted by a collector (8) of the tool (6), extend in the feed direction (4), and that are spaced apart from one another on the output conveyor (5) along the output direction (9) .
